# EUROPEAN PATENT APPLICATION

(11) **EP 0 767 450 A2**
(43) Date of publication of application: **09.04.1997**
(21) Application number: 96115929.0
(22) Date of filing: 04.10.1996
(51) Int. Cl.: G11B 5/48

(54) **Head/pre-AMP ribbon interconnect for data storage devices**

(30) Priority: 06.10.1995 US 539893
(71) Applicant: W.L. GORE & ASSOCIATES, INC., Newark, Delaware 19714 (US)
(72) Inventor: J. Scott, Reynolds, Tempe, Arizona 85283 (US); Matt C., Kesler, Phoenix, Arizona 85044 (US)
(74) Representative: Klunker . Schmitt-Nilson . Hirsch

(57) **Abstract**

An improvement is provided for a data storage device having a read/write transducer head and an active electronic device. The improvement comprises a ribbon interconnect having at least one support tape and at least two cylindrically shaped conductors. The ribbon interconnect has opposed first and second ends. The at least two cylindrically shaped conductors are fixedly attached to the at least one support tape in parallel, coplanar relation. A predetermined portion of the at least one support tape is removed from the first and second ends so as to render the ends of the cylindrically shaped conductors freely multi-axially moveable one to another.

## Description

### FIELD OF THE INVENTION

This invention generally relates to data storage devices. More particularly, the present invention relates to an improved electrical interconnect for electrically coupling a transducer head to electronic circuitry of a data storage device.

### BACKGROUND OF THE INVENTION

Disc drive machines record and reproduce information stored on a recording medium. Typical hard disc drives include one or more vertically aligned, rotating information storage discs, each having at least one associated slider, onto one surface of which is affixed or fabricated one or more read/write transducer(s) ("heads), which are adapted to transfer information between the disc and an external computer system. The information storage discs are journaled about a spindle motor assembly capable of rotating the discs at high speeds. The sliders are carried by a plurality of vertically-aligned, elongated flexure arms that in turn are carried by a head positioner assembly. The head positioner assembly is adapted to move the sliders back and forth in unison across the face of the vertically-aligned discs. The head positioner assembly is traditionally either rotationally mounted, or is in the form of a carriage that is free to move back and forth along a single axis. In either case, the head positioner assembly is adapted to precisely position the transducer heads relative to the magnetic information storage discs.

In the typical operation of such a disc drive, the sliders rest on landing zones on the surface of their associated discs when the power is off. In operation, the drive unit is powered up and the disc pack begins to rotate. Once the disc reaches a certain critical speed, the sliders rise slightly off the landing zone under the lifting influence of a small air bearing which is created by the speed of rotation of the discs. During normal operation, the sliders which remain floating above the discs are said to "fly" over the discs, thereby preventing wear on the disc surfaces and potential destruction of the data.

Typically, the transducer head of the disc drive is electrically connected to an active device, such as a pre-amplifier for example, by way of an electrical interconnect. One interconnect may be attached to each transducer head of the disc drive. All such interconnects may be attached to a single active device, or to other interconnects, such as printed circuit boards or flexible printed circuitry, which are connected to the active device(s).

The proper functioning of the disc drive is dependent upon the design of the interconnect. More particularly, each transducer head must be free to move in one or more dimensions, such as pitch, roll, and/or yaw, to maintain its precise positioning with respect to a disc surface. If the mechanical characteristics of the interconnect, including its stiffness and its spring constant, are such as to constrain the movement of the "flying" transducer head, any imperfection in the surface of the spinning disc may result in improper positioning of the transducer head.

The electrical characteristics of the interconnect must permit the reading and writing of data at a rate consistent with the design of the transducer head and a pre-amplifier, or other active device to which the interconnect is attached. To achieve such electrical characteristics, the conductors within the interconnect should possess one or more of the following characteristics: low inductance, low capacitance, low resistance, or a predetermined complex characteristic impedance. Also, to achieve such electrical characteristics, shielding may be required within the interconnect to control one or more of the following: inductance, capacitance, resistance, complex characteristic impedance, electrical cross-talk from one conductor to another, or electromagnetic interference.

One type of interconnect which has been employed in the past is a twisted wire interconnect. Such an interconnect is typically formed of two or more 48 gauge wires. Each wire is insulated with a non-conductive material, such as polyurethane, in a thickness of about five microns. The wires may be twisted all together, or may be twisted in smaller groups, such as pairs, and the smaller groups then assembled together. The twisted wires may then be placed in a tube of an insulating material, such as a fluoropolymer, such that the ends of the wires extend beyond the ends of the tube. These interconnects are about two inches long. The ends the individual wires may be stripped of their insulation to permit the wires to be bonded to flat metallic pads, or the wires may be attached by bonding through the insulation. The wires may be plated with a noble metal, such as gold, which is not prone to oxidation to thereby provide a superior bond to the metallic pads.

Although the twisted wire interconnects are readily available, may be produced in mass quantities, and provide reliable bonding, these interconnects suffer from shortcomings which detract from their usefulness. More particularly, each end of each wire must be independently identified and located upon a bond pad prior to bonding, which is, of course, a laborious and error-prone process step. Also, because the individual wires are moveable relative to the tube and to the other wires, these interconnects are not compatible with completely automated assembly methods. Additionally, the electrical characteristics of this type of interconnect cannot be readily varied. For example, it is not possible to achieve very low levels of inductance and capacitance. Finally, an effect known as the "proximity effect" causes electrical resistance at high frequencies to be greater than that of other types of interconnects.

Another type of interconnect which has been used in the past is a flexible printed circuit. This flexible printed circuit may be fabricated and then attached to the stainless steel suspension which supports the head, or it may be fabricated as an integral part of the suspension by a process of lamination and etching. Such a flexible printed circuit typically consists of one or more dielectric layers, which are not electrically conductive, alternating with one or more printed copper layers. A ground plane may be included over the whole area of the circuit or only in certain regions. This ground plane may enhance electromagnetic noise rejection and/or may be used to enhance the electrical characteristics of one or more conductors (for example by reducing the inductance).

Although a flexible printed circuit interconnect enables the automated installation thereof within a disc drive assembly, enables some control of the electrical properties of the interconnect, and is less subject to the "proximity effect", this type interconnect is expensive to manufacture, employs bonding techniques which differ from those widely used in making such data storage devices and which may present cost and/or reliability challenges, and the achievement of very low levels of inductance (e.g. less than 3 nano-Henries per inch of length) and/or very low levels of capacitance (e.g. less than 0.5 pico-Farads per round-trip inch of length) may not be possible with common fabrication methods.

The foregoing illustrates limitations known to exist in present interconnects in data storage devices. Thus, it is apparent that it would be advantageous to provide an improved interconnect directed to overcoming one or more of the limitations set forth above. Accordingly, a suitable alternative is provided including features more fully disclosed hereinafter.

### SUMMARY OF THE INVENTION

The present invention advances the art of electrical interconnects for data storage devices, such as disc drives, beyond which is known to date. In one aspect of the present invention, an improvement is provided for a data storage device having a read/write transducer head and an active electronic device. The improvement comprises a ribbon interconnect having at least one support tape and at least two cylindrically shaped conductors. The ribbon interconnect has opposed first and second ends. The at least two cylindrically shaped conductors are fixedly attached to the at least one support tape in parallel, coplanar relation, one to another. A predetermined portion of the at least one support tape is removed from the first and second ends so as to render the ends of the cylindrically shaped conductors freely multi-axially moveable.

It is a purpose of the present invention to provide an interconnect for electrically connecting two or more metallic pads of a read/write transducer head with two or more pads on the surface of a rigid, printed circuit, or a flexible printed circuit.

Another purpose of the present invention is to provide such an interconnect using wire-bonding methods which have been proved reliable and cost-effective in this environment, and which may be used without large new investments in processing equipment.

Another purpose of the present invention is to provide such an interconnect which permits the read/write transducer head of a disc drive to move freely in two or more dimensions and/or rotate about one or more axes while flying near the surface of the data disc.

Yet another purpose of the present invention is to provide such an interconnect using fabrication methods which are continuous in nature, and therefore, cost-effective in high volume production.

Still another purpose of the present invention is to provide such an interconnect which prevents conductors from contacting other conductors or conductive components within a data storage device.

Still another purpose of the present invention is to provide such an interconnect which is constructed of materials which do not outgas during operation or assembly of the data storage device to a degree which interferes with the operation of this device over its useful life.

### BRIEF DESCRIPTION OF THE DRAWINGS

The foregoing summary, as well as the following detailed description of a preferred embodiment of the invention, will be better understood when read in conjunction with the appended drawings. For purposes of illustrating the invention, there is shown in the drawings an embodiment which is presently preferred. It should be understood, however, that the invention is not limited to the precise arrangement and instrumentality shown. In the drawings:
Figure 1 is a plan view of a disc drive assembly in which the present invention is particularly useful;
Figure 2 is a partial perspective view of a prior art read/write transducer head assembly having a twisted wire interconnect;
Figure 3 is a partial perspective view of a read/write transducer head assembly having the ribbon interconnect of the present invention;
Figure 4 is a sectional view of one embodiment of the ribbon interconnect of the present invention;
Figure 5 is a sectional view of an alternate embodiment of the ribbon interconnect of the present invention;
Figure 6 is a sectional view of an alternate embodiment of the ribbon interconnect of the present invention; and
Figure 7 is a partial plan view of the ribbon interconnect of the present invention wherein the ends of the individual conductors are shown insulated by the support ribbon or tape.

### DETAILED DESCRIPTION OF THE INVENTION

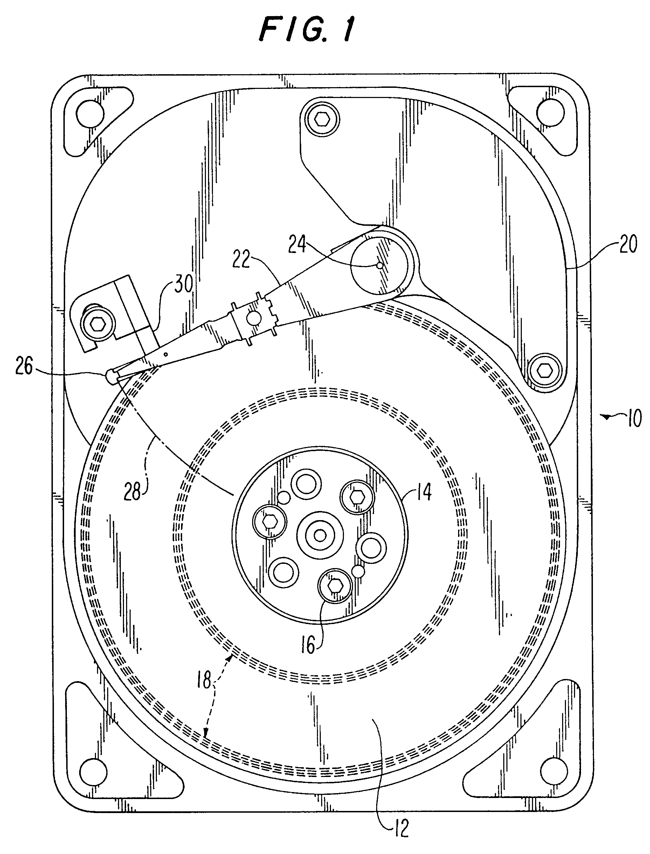

Shown in Figure 1 is a plan view of a disc drive 10 which incorporates a plurality of discs 12 mounted on a spindle motor by a disc clamp 14 and a plurality of screws 16. Each disc 12 contains a number of concentric, circular data tracks 18 on which data is written and from which data is read. An actuator motor, shown generally at 20, serves to pivot a plurality of head mounting arms 22 about a pivot point 24. Mounted to each head mounting arm 22 is a load beam/gimbal/head assembly 26 which is moved back and forth across the discs 12, along arc 28, in order to access the data tracks 18.

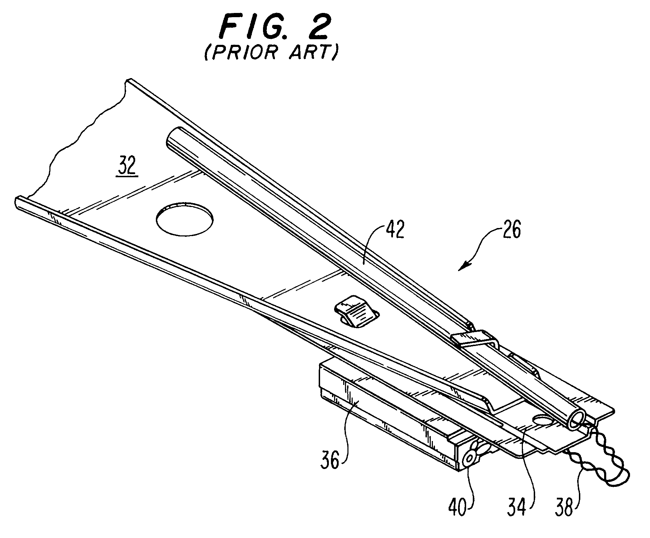

Figure 2 illustrates a prior art load beam/gimbal/head assembly 26 including a load beam 32, a gimbal 34, a transducer head/slider assembly 36 and a twisted pair type interconnect 38, used to connect electrical signals to and from the read/write transducer head 40 with an active device (not shown), such as a pre-amplifier. As should be understood, the twisted pair type interconnect 38 comprises insulated conductors which are independently moveable relative to each other and to a containing tube 42. Such an interconnect is not completely compatible with automated assembly methods.

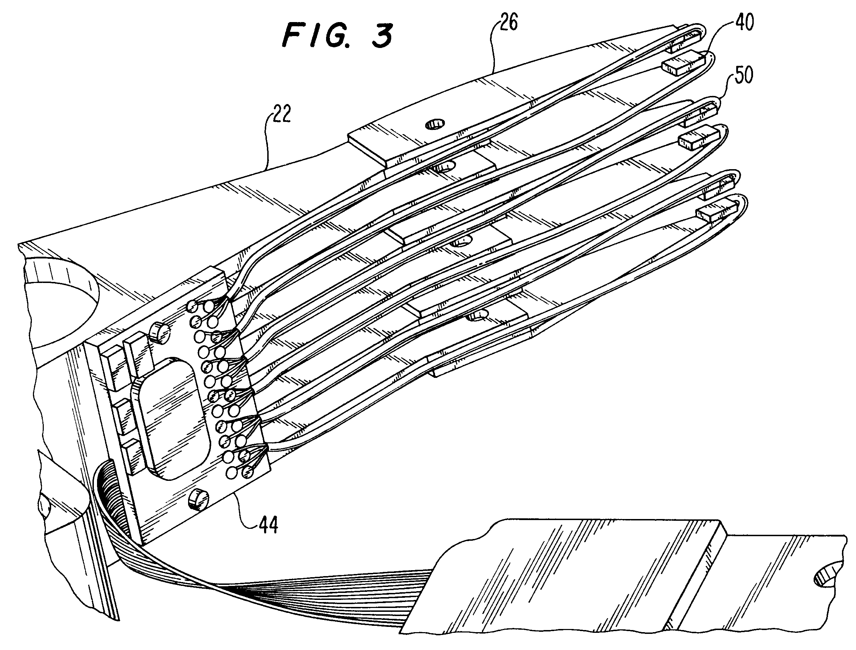

As best seen by reference to Figure 3, according to the present invention, the read/write transducer head 40 is connected to an active electronic device 44, which is illustrated as a pre-amplifier, by a novel ribbon interconnect 50. (An extension of the same ribbon interconnect 50 may also be utilized to connect the elements of an active electronic device to further utilization circuits and/or equipment.) However, the invention is primarily concerned with the connections between the read/write head and an active electronic device. The ribbon interconnect 50 can be bent or turned to accommodate electrical connection without adversely affecting the "flying" performance of the read/write transducer head 40.

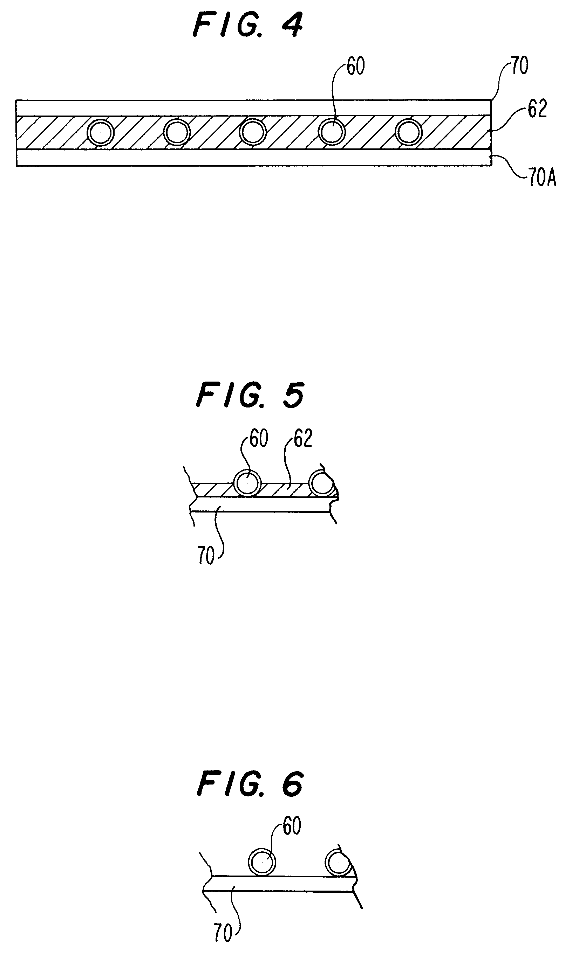

The novel ribbon interconnect of the present invention is best understood by reference to Figures 4-7. As seen therein, the ribbon interconnect comprises at least two cylindrically shaped conductors 60 and at least one support ribbon or tape 70.

The shape of the conductors 60 is an essential feature of the present invention. As should be understood, the cylindrically shaped conductors provide for effective multi-axis movement, which permits the read/write transducer head 40 to move freely while "flying" from the surface of the data disc. The cylindrical conductors may be an appropriate size, such as 48 gauge for example. The conductors may be plated with a Nobel metal, such as gold, so that bonding to flat metallic pads is enabled by conventional bonding methods. The conductors are disposed in parallel, coplanar relation at predetermined spaced intervals. Typically the conductors are spaced at intervals ranging from about .0015 inches to about .0050 inches. The individual conductors may be individually insulated with a suitable insulation, such as for example polyurethane, polyimide, porous polytetrafluoroethylene, polytetrafluoroethylene, or fluorinated ethylenepropylene. The conductors may be insulated by conventional methods such as by extrusion, tape wrapping or dip coating, for example. It is anticipated that a material may be employed for the conductor insulation which has a higher melt temperature than the material used for the at least one tape to facilitate processing in certain instances. Also, the conductors may be coated with a conductive material, such as but not limited to, copper, aluminum, gold, silver, a carbon-loaded fluoropolymer, a plated polymer, a plated fluoropolymer, or a plated porous polytetrafluoroethylene, prior to inclusion in the interconnect.

The at least one support ribbon or tape 70 may be a fluoropolymer such as porous polytetrafluoroethylene, polytetrafluoroethylene, fluorinated ethylenepropylene, or perfluoroalkoxy polymer, or a film such as polyester or polyimide.

As the term is used herein, porous polytetrafluoroethylene (PTFE) shall mean a membrane which may be prepared by any number of known processes, for example, by stretching or drawing processes, by papermaking processes, by processes in which filler materials are incorporated with the PTFE resin and which are subsequently removed to leave a porous structure, or by powder sintering processes. Preferably, the porous polytetrafluoroethylene membrane is porous expanded polytetrafluoroethylene membrane having a microstructure of interconnected nodes and fibrils, as described in U.S. Patent Nos. 3,953,566 and 4,187,390, which are incorporated herein by reference, and which fully describe the preferred material and processes for making them. The porous polytetrafluoroethylene membrane may have a thickness in a range from about 3 to about 1,000 micrometers, preferably in a range of from about 5 to about 100 micrometers, and a pore volume in a range from about 20 to about 98 percent.

Referring to Figures 4-6, the ribbon interconnect 50 may comprise a plurality of embodiments. More particularly, as illustrated in Figure 4, the ribbon interconnect 50 may include a first tape 70, a layer of adhesive 62, a plurality of cylindrically shaped conductors 60 and a second tape 70A. Suitable adhesives include, but are not limited to, thermoplastics, such as polyester and/or thermosets such as epoxies. The embodiment illustrated in Figure 5 includes a plurality of conductors 60, a layer of adhesive 62, and a single support tape 70. The embodiment of the present invention illustrated in Figure 6 includes a plurality of conductors 60 and a single support tape 70.

In addition to the foregoing, one or more ground planes may be included in any embodiment of the present invention. Suitable ground plane material may be metal foil or another conductive material. Examples of specific embodiments of the present invention are outlined in the following table.

| **WIDTH** | **PITCH******* | **TAPE 1** | **ADHESIVE** | **TAPE 2** | **CONDUCTOR/COATING** |
|---|---|---|---|---|---|
| .028" | .0045" | .001" POLYESTER WITH .0005" ADHESIVE | (.001") CLEAR | .001" POLYESTER WITH .0005" ADHESIVE | 48 AWG Au/4 micron POLYURETHANE |
| .028" | .0045" | .001" POLYESTER WITH .0005" ADHESIVE | (.0005") CLEAR | NONE | 48 AWG Au/4 micron POLYURETHANE |
| .028" | .0045" | .0003" POLYESTER | .0001 | .0003" POLYESTER | 48 AWG Au/4 micron POLYURETHANE |
| .028" | .0045" | .0003" POLYESTER | .0001 | NONE | 48 AWG Au/4 micron POLYURETHANE |

| | | | | | |
|---|---|---|---|---|---|
| *The term "PITCH" is used to define the center-to-center distance between conductors. | | | | | |

As described hereinabove, one or more tapes 70 may be used. Each tape must be approximately the width of the finished cable, or wider. A layer of adhesive 62, may not be needed if process temperatures are such that some or all of the tapes will reflow. Alternately, one or more adhesive layers may be used either as free films and/or as coatings on one or more of the tapes.

Tooling to construct the ribbon interconnect of the present invention consists of machined drums and/or rollers, such that the ribbon interconnect materials provided above are formed together, by a continuous process, under heat and/ or pressure. Conductors and/or tapes may be guided so that their positions with respect to each other are controlled. Tooling may be machined so as to hold each wire in position. Tooling may also be heated, and/or heat may be applied to some or all of the cable materials before they enter the tooling. The tooling may impose a cross-sectional shape on the materials which requires deformation of some or all of the materials. Process temperatures and the time at which the materials are held at elevated temperature are chosen such that reliable bonds are formed between the tapes and the conductors, between two or more tapes, and/or between the tapes and the insulation of the conductors.

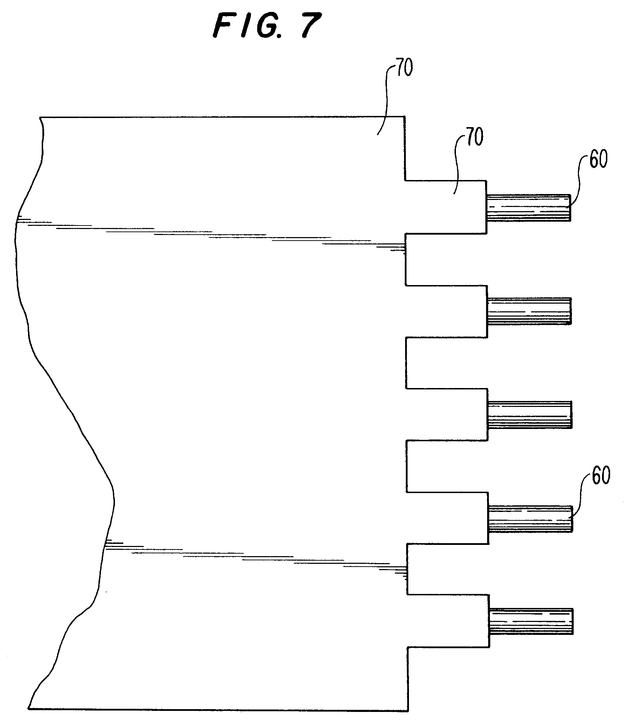

After the ribbon interconnect is formed, it may be necessary to trim the edges to remove excess material and to control the dimensions of the finished interconnect and/or the distance from each edge to each conductor. This may be done by any suitable method such as by rolling blades, by stationary blades, and/or by laser. The interconnect of the present invention may be prepared for termination by stripping a portion of the tape 70 near one end or both ends to expose the conductors 60. The tape 70 should be stripped such that the insulation, if any, of the individual conductors remains in place over a portion of the free length of the conductors. As a result, one or more conductors may be free to move independent of the others, thus enhancing the ability of the head to maintain a satisfactory location with respect to the surface of the data storage media. If uninsulated conductors have been employed, the tape 70 may be stripped in such a fashion that the tape itself is operable to insulate the individual conductors, as best understood by reference to Figure 7. The insulation material surrounding one or more of the conductors may be completely removed in a region surrounding the conductor such that the metal surface is exposed and can be bonded to a metal pad using common methods.

A laser may be employed to strip the portion of the tape 70 from the ribbon interconnect. The laser employed should have adequate beam size and control, such as an excimer laser for example. The laser beam may be split such that two or more beams are formed. One beam may strike each of the two flat surfaces of the ribbon cable at the same plane location at the same time. The beams and/or the ribbon interconnect may be moved such that the laser beam(s) scan the surface of the interconnect in a direction normal to the conductors. The depth to which the beam(s) remove material may be controlled by adjusting the focal plane of the beam(s) with resect to the plane of the conductor centers and/or by adjusting beam parameters such as pulse shape and duration. This cutting depth may be adjusted as the beam(s) scan(s), so as to leave a layer of insulation on each conductor.

Although a few exemplary embodiments of the present invention have been described in detail above, those skilled in the art readily appreciate that many modifications are possible without materially departing from the novel teachings and advantages which are described herein. Accordingly, all such modifications are intended to be included within the scope of the present invention, as defined by the following claims.

## Claims

1. In a data storage device having a read/write transducer head and an active electronic device, an improvement comprising:
a ribbon interconnect having at least one support tape, the ribbon interconnect having opposed first and second ends; and
at least two cylindrically shaped conductors being fixedly attached to the at least one support tape in parallel, coplanar relation to one another, wherein a predetermined portion of the at least one support tape is removed from the first and second ends so as to render the ends of the cylindrically shaped conductors freely, multi-axially moveable with respect to one another.

2. The invention of claim 1, wherein the at least one support tape is comprised of a material selected from a group consisting of: porous polytetrafluoroethylene, porous expanded polytetrafluoroethylene, polytetrafluoroethylene, fluorinated ethylenepropylene, perfluoroalkoxy polymer, polyester and polyimide

3. The invention of claim 1, wherein the at least two cylindrically shaped conductors are fixedly attached to the at least one support tape by an adhesive.

4. The invention of claim 1 further including at least one conductive ground plane.

5. The invention of claim 1, wherein the at least two cylindrically shaped conductors are individually insulated prior to inclusion in the ribbon interconnect.

6. The invention of claim 5, wherein the conductor insulation has a higher melt temperature than the at least one support tape.

7. The invention of claim 5, wherein the conductor insulation is a material selected from a group consisting of: polyurethane, polyimide, porous polytetrafluoroethylene, polytetrafluoroethylene, and fluorinated ethylenepropylene.

8. The invention of claim 5, wherein the insulated conductors are individually coated with a conductive material.

9. The invention of claim 8, wherein the conductive material is copper.

10. The invention of claim 8, wherein the conductive material is aluminum.

11. The invention of claim 8, wherein the conductive material is a carbon-filled fluoropolymer.

12. The invention of claim 8, wherein the conductive material is gold.

13. The invention of claim 8, wherein the conductive material is silver.

14. In a data storage device having a read/write transducer head and an active electronic device, an improvement comprising:
a ribbon interconnect having a pair of support tapes, the ribbon interconnect having opposed first and second ends; and
at least two cylindrically shaped conductors disposed between the pair of support tapes, and being fixedly attached to the support tapes by an adhesive in parallel, coplanar relation one to another, wherein a predetermined portion of the support tapes is removed from the first and second ends so as to render the ends of the cylindrically shaped conductors freely, multi-axially moveable.

15. The invention of claim 14, wherein the pair of support tapes are comprised of a material selected from a group consisting of: porous polytetrafluoroethylene, porous expanded polytetrafluoroethylene, polytetrafluoroethylene, fluorinated ethylenepropylene, perfluoroalkoxy polymer, polyester and polyimide

16. The invention of claim 14 further including at least one conductive ground plane.

17. The invention of claim 14, wherein the at least two cylindrically shaped conductors are individually insulated prior to inclusion in the ribbon interconnect.

18. The invention of claim 17, wherein the conductor insulation has a higher melt temperature than the support tapes.

19. The invention of claim 17, wherein the conductor insulation is a material selected from a group consisting of: polyurethane, polyimide, porous polytetrafluoroethylene, polytetrafluoroethylene, and fluorinated ethylenepropylene.

20. The invention of claim 17, wherein the insulated conductors are individually coated with a conductive material.

21. The invention of claim 20, wherein the conductive material is copper.

22. The invention of claim 20, wherein the conductive material is aluminum.

23. The invention of claim 20, wherein the conductive material is a carbon-filled fluoropolymer.

24. The invention of claim 20, wherein the conductive material is silver.

25. The invention of claim 20, wherein the conductive material is gold.

26. The invention of claim 8 or 20, wherein the conductive material is a plated polymer.

27. The invention of claim 8 or 20, wherein the conductive material is a plated fluoropolymer.

28. The invention of claim 8 or 20, wherein the conductive material is plated porous polytetrafluoroethylene.
